# EUROPEAN PATENT APPLICATION

(11) **EP 0 812 721 A2**
(43) Date of publication of application: **17.12.1997**
(21) Application number: 97109189.7
(22) Date of filing: 06.06.1997
(51) Int. Cl.: B60N 2/06

(54) **A device for longitudinally adjusting motorcar seats**

(30) Priority: 12.06.1996 IT TO960506
(71) Applicant: C.T.G. di Gallo M. & C. S.n.c., 12060 Verduno (Cuneo) (IT)
(72) Inventor: Callo, Guido, 12060 Verduno (Cuneo) (IT)
(74) Representative: Lotti, Giorgio

(57) **Abstract**

A device for longitudinally adjusting motorcar seats comprises a pair of fixed guides (10) integral to the vehicle floor, a pair of mobile guides (20) integral to the seat and sliding along the fixed guides, and hooking means (80) elastically biased (85) so as to releasably lock the mobile guides (20) to the fixed guides (10) in a selected one of a plurality of positions defined by fixed hooking seats (11). The hooking means (80) comprise a wedge-shaped member having a wall (83) inclined with respect to the longitudinal direction (y). When this member wedges into the selected hooking seat (11), its inclined wall (83) takes away the clearance in the longitudinal direction between the fixed guides and the mobile guides. First and second sliding shoes are secured for sliding fast with the mobile guides (20) and elastically biased against corresponding walls of the fixed guides (10) so as to take away also the clearance in the transversal (x) and vertical (z) directions between the fixed and mobile guides.

## Description

### Field of the invention

The present invention refers to a device for longitudinally adjusting motorcar seats.

### Background of the invention

As known, the front seats of modern motorcars have means for adjusting the longitudinal position of the seat. These adjusting devices are comprised of a pair of fixed guides, secured to the vehicle floor, and a pair of mobile guides mounted to the seat and sliding along the fixed guides. Each seat is fitted with a pair of mobile and fixed guides at each longitudinal side of the seat. Special brackets are provided on the vehicle floor for rigidly securing the fixed parts of these devices.

Generally, the above adjusting systems also comprise sliding means such as rollers, sliding shoes, balls, etc. interposed between the fixed and mobile guide for facilitating the sliding motion of the seat and limit the slack between the guides. Releasable locking means are normally mounted to securely lock the mobile guide to the fixed guide once the position of the seat is adjusted.

In nearly all present solutions the stroke of the mobile guides is stopped by a safety device, normally a toothed latch element fast with the mobile guide and biased downwards by a spring so as to engage a corresponding toothing on the fixed guide and lock the seat in position.

Release of the guides is attained manually through a tubular handle hinged on both the left and right guides, or by other means, such as electric devices or Bowden cables. In releasing, the latch element overcomes the bias of the spring and comes free of the toothing on the fixed guide, allowing to move the seat in the lengthwise direction.

There is an ever increasing demand in the motorcar industry for comfort and safety for the passengers. As to the seats, it has been found to be cost effective and safe to fix one of the attachments of the safety belt to one of the mobile guides of the seat. Safety rules for new cars therefore require that the mobile guides must be able to withstand considerable stresses.

Motorcar type tests comprise crash tests carried out for the vehicle body and the seats; in such a test, a dummy of a certain weight is normally located on the seat with the safety belt on. After the crash test, the mobile guides must not collapse or yield. In the near future, this requirement will become even more important as it is foreseen that all three of the safety belt attachment points will be located on the seat. It is therefore of primary importance that the various sections, as well as the shapes and dimensions of the seat guide devices, are capable of withstanding very high forces without being damaged.

Another important issue is noise. Designers are making many efforts to try and keep noise as low as possible, including that of the sliding guides. As the front passenger's seat is often vacant, when the car is travelling on unmade roads unpleasant noises are transmitted to the passenger's cabin due to vibration. Where some degree of slack exists between the fixed and mobile guides, this amplifies oscillation caused by vibration of the vehicle body and causes various noises.

A different effect is generated on the driver's seat or the passenger's front seat when it is taken. Owing to the slack, the passenger gets an unpleasant feeling of instability as he slides the seat. To obviate this, manufacturers are constructing seat guide devices with very low tolerances, which are attainable only through sophisticated technological processes. As a reduction of tolerances renders sliding movement more difficult, rollers, balls and sliding shoes have been added to reduce the forces to be applied in sliding the seat.

### Summary of the invention

It is an object of the present invention to provide a device capable of satisfying the above discussed requirements while overcoming the above prior art drawbacks. It is another object to construct such a device through simple, reliable and low cost processes.

To provide a better reaction to the forces applied to the safety belts, the present invention provides a guide with an improved section, wherein locking of the mobile and fixed guides is carried out at a location that does not weaken the section, contrary to presently known devices.

It is another object of the present invention to provide an adjusting device with means for locking the sliding movement having a special shape, effective in taking away longitudinal slack and capable of withstanding high forces.

A further object of this invention is to provide the seat guides with a slack taking-up system. Besides eliminating transversal and vertical slack, this facilitates the manufacturing process of the guide sections and relieves the manufacturers from having to produce low tolerance components. This system guarantees a silent sliding motion free of jamming, as the two metal sections are separated by plastic members and do not come into contact with eachother.

In accordance with one aspect of the invention as claimed, these objects are accomplished by the provision of a device for longitudinally adjusting motorcar seats, of the type comprising a pair of fixed guides integral to the vehicle floor, a pair of mobile guides integral to the seat and sliding along said fixed guides, and hooking means elastically biased so as to releasably lock the mobile guides to the fixed guides in a selected one of a plurality of positions defined by fixed hooking seats, characterised in that said hooking means comprise at least one substantially wedge-shaped member having a wall inclined with respect to the longitudinal direction, whereby when the said member wedges into the selected hooking seat, said inclined wall takes away the clearance in the longitudinal direction between the fixed guides and the mobile guides; at least a first and a second sliding shoe means being secured for sliding fast with the mobile guides and elastically biased against corresponding walls of the fixed guides so as to take away also the clearances in the transversal and vertical directions between the fixed guides and the mobile guides.

### Brief description of the drawings

In order that the present invention may be well understood there will now be described a preferred embodiment thereof, given by way of example, reference being made to the accompanying drawings, in which:
- FIG. 1: is an overall perspective view of an adjusting device according to the present invention;
- FIGS. 2 and 3: are enlarged views showing some details of the locking system of the device of FIG. 1;
- FIG. 4: is a longitudinal cross-sectional view of a locking element of the device according to this invention;
- FIG. 5: is a transverse cross-sectional view of the adjusting device of this invention;
- FIG. 6: is a perspective view of the device of this invention, some pieces being broken off to show the inner parts;
- FIG. 7: is a transverse cross-sectional view of the adjusting device showing some details of the system for locking the sliding motion of the guides;
- FIGS. 8 and 10: are perspective views, seen from different angles, of a component of the device of this invention;
- FIG. 9: is an enlarged view of a detail of FIG. 8;
- FIG. 11: is a cross-sectional view similar to FIG. 7, where other details of the device are visible; and
- FIG. 12: is a perspective view, similar to that of FIG. 6, with broken off pieces for the sake of showing further details of the device.

### Detailed description of the invention

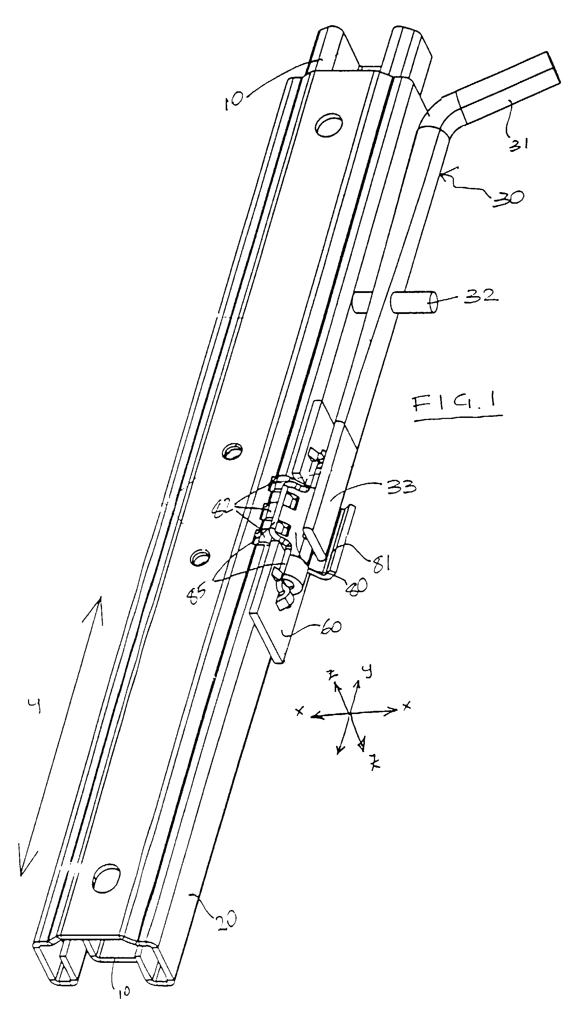

To adjust the lengthwise position of a motorcar front seat, each seat is comprised of a pair of laterally spaced devices as the one shown in FIG. 1. For the sake of simplicity, the drawings and the description relating thereto will refer only to a single device (the one on the left side). It is understood that each seat is to be fitted with a pair of said devices, laterally spaced apart and oriented substantially parallel in the longitudinal direction of the vehicle, indicated by axis y in the three-dimensional diagram near FIG. 1.

With reference initially to FIG. 1, a fixed guide 10 is rigidly fixed to the floor of the vehicle (not shown). Fixed guide 10 slidably supports a mobile guide 20 integral to the bottom of a seat (not shown). A manually operated release lever 30 is hinged at an intermediate point thereof to the mobile guide 20 by means of a pin 32. Pin 32 is substantially horizontal and oriented transversally in the direction of axis x in FIG. 1.

The release lever 30, per se known, is substantially U-shaped and forms a front central portion 31 serving as a handle. The free end portions 33 of the handle respectively engage locking devices for normally locking the mobile guides to the fixed guides and temporarily allowing to release the mobile guides in order to change the lengthwise position of the seat. This is attained, in known manner, against the biasing action of an elastic force which tends to keep the guides mutually locked.

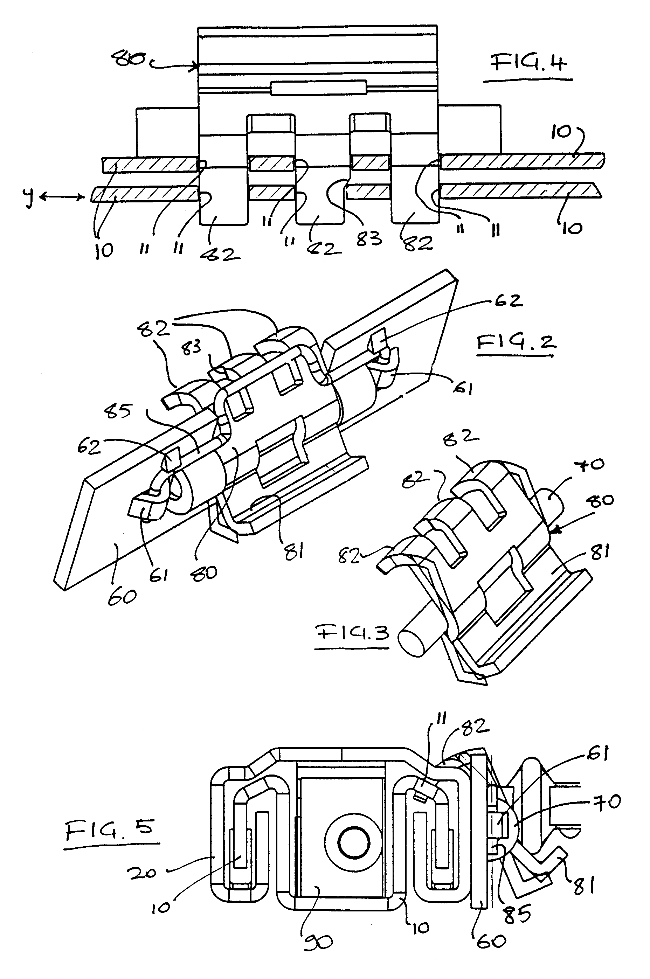

Each locking device is securely anchored to its own mobile guide 10 at a side wall 21 thereof. The locking device comprises a support plate 60 to which there is mounted a locking hook 80. Hook 80 is hinged on a pin 70 rigidly fixed to the support plate 60 and oriented parallel to the guides. Hook 80 rotates centrally on pin 70 (FIG. 3). At the opposite ends of the hook there are respectively provided a concave seat 81 for engagement of the free end 33 of release lever 30, and a set of teeth 82 adapted for locking in corresponding hooking seats 11 serving as fixed hooking seats on the fixed guide 10. An elastic member 85, preferably in form of a spring with end portions fixed to the support plate 60, constantly urges the teeth 82 in a locking position within hooking seats 11 (shown in FIGS. 4, 5 and 12).

Release of the system is accomplished by pulling the handle 31 upward. In doing so, the handle end 33 presses the concave seat 81 of hook 80 downwards, overcoming the bias of spring 85. This releases teeth 82 from the hooking seats 11 formed in the fixed guide and allows for lengthwise movement of the seat. On the other hand, release of the handle causes locking of the mobile guides and therefore of the seat.

Referring to FIG. 2, the spring 85 is snap-fitted to the support plate 60. The two ends of the spring are at first inserted in tunnel portions 61 obtained in the support; then, the spring is pushed downwards until it passes over a stopping tooth 62 for the spring.

In the three-dimensional diagram of FIG. 1, the directions of possible clearances of a sliding system are designated at x, y, z.

The longitudinal cross-sectional view of FIG. 4 clearly shows the teeth 82 of locking hook 80, having three teeth. According to the present invention, the central tooth is substantially wedge-shaped and forms a wall 83 inclined with respect to the longitudinal direction. Inclined wall 83 stops the vertical advancement of hook 80 during the locking motion into hooking seat 11. Owing to such a wedge-like arrangement of the hooking means, the hook takes away clearance in the lengthwise direction as it wedges itself into the seats 11 of fixed guide 10.

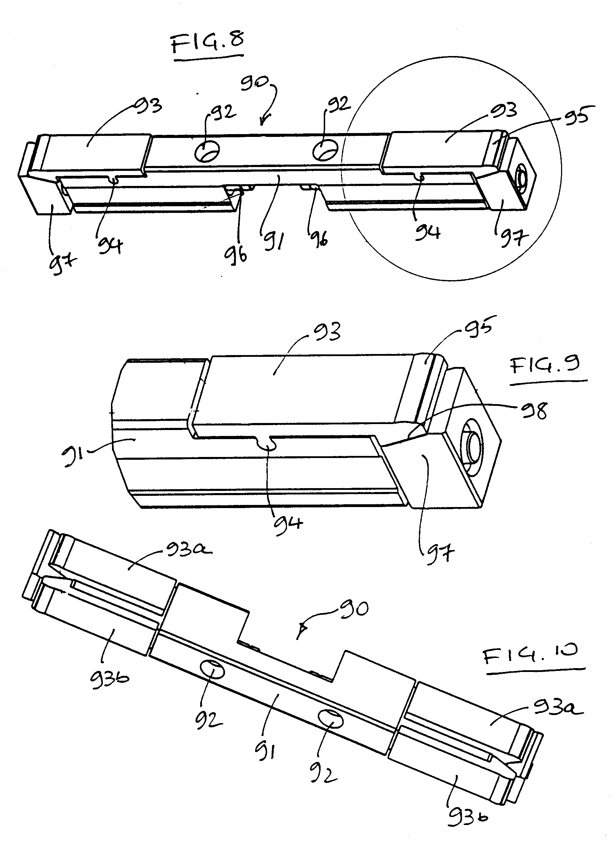

Still in accordance with the present invention, clearance in the vertical and sideways directions is taken away by a slack taking-up device 90, separately illustrated in FIGS. 8 to 10. The device 90 comprises an elongated central body 91 adapted for slidably inserting within the fixed guide 10, as shown in the section of FIG. 6.

Obtained in the central body 91 are two bores 92 for accommodating one or more pins 22 for driving the mobile guide 20, to which the device 90 is rotatably mounted so as to slide as a unit therewith. At each end of the central body 91 there is fitted a pair of sliding shoes 93a, 93b, acting in perpendicular planes and adapted for taking away both vertical and transversal clearance between the mobile guides and the fixed guides. In the central body 91 there are further provided respective hinging seats 94 for rotatably accommodating the sliding shoes 93.

The end portions 95 of the sliding shoes 93 are elastically pressed in the outward direction to contact the fixed guides 10. Such an elastic bias is provided by a pair of lengthwise springs 96 which pull a pair of end cams or wedges 97 towards the centre of body 91. Said end cams form an inclined surface 98 for each sliding shoe. Inclined surfaces 98 engage the sliding shoes and are so inclined and oriented as to push and extend vertically and transversally, respectively, the sliding shoes end portions 95. These perpendicular elastic forces integrate the action carried out by the wedged locking tooth 83 as they take away the clearance between the mobile and fixed guides also in the transversal and vertical directions x and z.

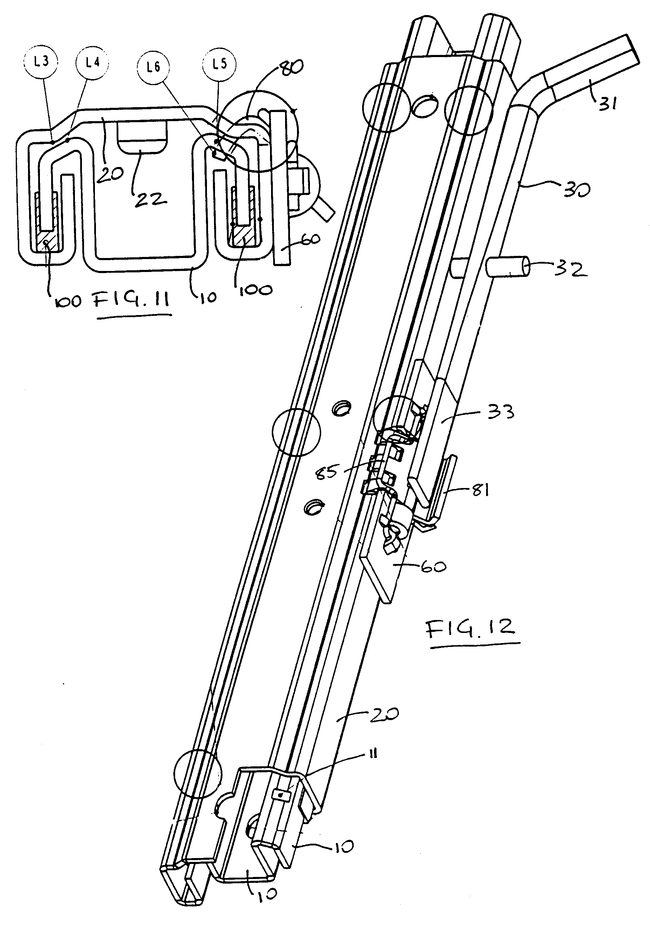

With reference also to FIG. 11, the device of the present invention further exploits conventional sliding shoes 100 fitted to the edges of the fixed guides. It will be appreciated that the two metal sections do not touch each other, whereby no unpleasant noise is generated as the position of the seat is adjusted.

The system of the present invention tends to considerably improve the smoothness during the sliding of the guides, which has become increasingly more important for automobile manufacturers. Besides avoiding jamming during the sliding of the mobile guide, the force for shifting the seat is constant and low, as the load are equally distributed. The number of sliding shoes to be installed may vary between 4 and 6, i.e. 2 or 3 on each wall of the fixed guide. This ensures that in every position of the fixed guide there will always be a sufficient number of sliding shoes engaged to render the whole system steady.

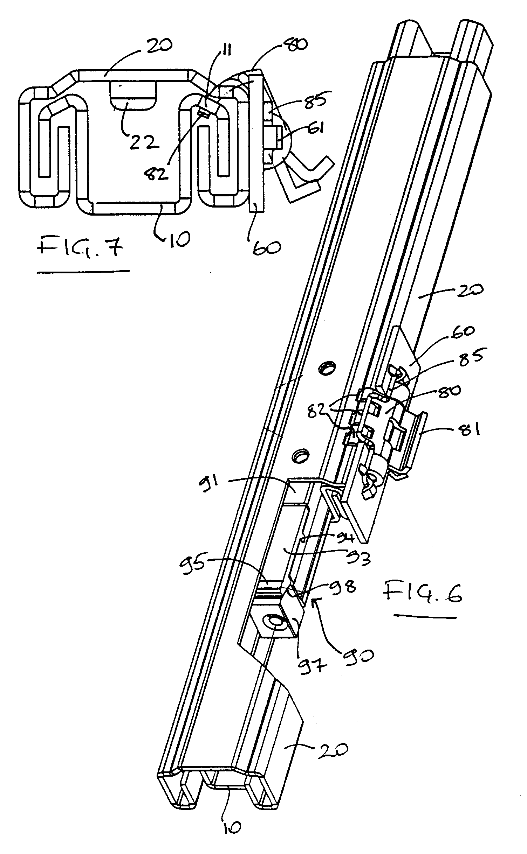

Referring in particular to FIGS. 5 and 11, it is also evident that in the zone of the sliding shoes no contact exists between the side walls of the sliding shoes and the side walls of the mobile guides. Moreover, there is no contact between the mobile guide section L3 and the fixed guide section L4, nor between the wall L6 of the hook and the seat L5 located on fixed guide 10. This is another advantageous aspect of the device of the present invention: the gap existing between the sections indicated that there is no need to construct sections having low tolerances, whereby they can be processed with less sophisticated working machines and apparatuses. The manufacturing process of the device of this invention will therefore be more cost-effective with respect to those of the past. Finally, it can be appreciated that, as shown in the circle in FIG. 11 evidencing the zone of the locking system, the present invention proposes to use the upper-lateral zones of the sections. The choice of these zones, of high structural strength, weakens the guide less than the presently known systems wherein openings are usually formed in the side walls of the guide sections. This aspect provides a considerable advantage in dimensioning the system so as to pass the crash test to which the seat is subjected.

## Claims

1. A device for longitudinally adjusting motorcar seats, of the type comprising a pair of fixed guides (10) integral to the vehicle floor, a pair of mobile guides (20) integral to the seat and sliding along said fixed guides, and hooking means (80) elastically biased (85) so as to releasably lock the mobile guides (20) to the fixed guides (10) in a selected one of a plurality of positions defined by fixed hooking seats (11), characterised in that said hooking means (80) comprise at least one substantially wedge-shaped member having a wall (83) inclined with respect to the longitudinal direction (y), whereby when said member wedges into the selected hooking seat (11), said inclined wall (83) takes away the clearance in the longitudinal direction between the fixed guides and the mobile guides; at least a first and a second sliding shoe means being secured for sliding fast with the mobile guides (20) and elastically biased against corresponding walls of the fixed guides (10) so as to take away also the clearances in the transversal (x) and vertical (z) directions between the fixed guides and the mobile guides.

2. A device as claimed in claim 1, characterised in that in each fixed guide there is inserted a device for taking up vertical and transversal slack (90), said slack taking-up device (90) sliding fast with the mobile guide and comprising a longitudinally (y) elongated body (91), each end portion of said body (91) being fitted with a pair of sliding shoes (93a, 93b) elastically biased in substantially perpendicular directions (x, z).

3. A device as claimed in claim 2, characterised in that said sliding shoes (93) are hinged (94) to said central body (91) and that an end portion (95) of each sliding shoe (93) is elastically extended towards the outside for contacting the fixed guides (10).

4. A device as claimed in claim 3, characterised in that said elastic biasing action on each pair of sliding shoes (93a, 93b) is exerted by a corresponding lengthwise spring member (96) acting on an end wedge (97) having a pair of inclined surfaces (98) adapted to provoke said extension.

5. A device as claimed in claim 1, characterised in that said hooking means (80) comprise a plurality of teeth (82) of which at least one is substantially wedge-shaped and provided with said inclined wall (83).

6. A device as claimed in claim 5, characterised in that said plurality of teeth comprises only one wedge-shaped tooth (83) flanked by straight teeth.

7. A device as claimed in claim 1, characterised in that said hooking means (80) engage the upper lateral zones of the sections forming the mobile guides (20) and the fixed guides (10).
